# EUROPÄISCHE PATENTANMELDUNG

(11) **EP 3 879 667 A1**
(43) Veröffentlichungstag der Anmeldung: **15.09.2021**
(21) Anmeldenummer: 21171893.7
(22) Anmeldetag: 06.03.2018
(51) Int. Cl.: H02J 7/00

(54) **MÖBEL UND ELEKTROMOTORISCHER MÖBELANTRIEB MIT EINER LADEVORRICHTUNG**

(30) Priorität: 06.03.2017 DE 102017104635
(62) Teilanmeldung aus: 18709538.5
(71) Anmelder: DewertOkin Technology Group Co., Ltd., Jiaxing City, Zhejiang Province (CN)
(72) Erfinder: HILLE, Armin, 33659 Bielefeld (DE)
(74) Vertreter: Kleine, Hubertus

(57) **Zusammenfassung**

Die Erfindung betrifft einen elektromotorischen Möbelantrieb mit mindestens einem Verstellantrieb (7, 8) zur elektromotorischen Verstellung mindestens eines bewegbaren Möbelteils relativ zu weiteren Möbelteilen, einer Steuereinrichtung (9) zur Ansteuerung des mindestens einen Verstellantriebs (7, 8) und einer mit der Steuereinrichtung (9) über ein Kabel (13) verbundenen Handbedienung (12'), die Bedienelemente (15) zur Steuerung des mindestens einen Verstellantriebs (7, 8) aufweist, sowie einer Ladevorrichtung (10) mit mindestens einem Ladeanschluss (11) zur Stromversorgung eines externen elektronischen Geräts, wobei der Ladeanschluss (11) in die Handbedienung (12') eingebaut ist. Der elektromotorische Möbelantrieb zeichnet sich dadurch aus, dass die Ladevorrichtung (10) einen Spannungswandler (112) aufweist, mit dem der mindestens eine Ladeanschluss (11) verbunden ist und der in der Handbedienung (12') angeordnet ist. Die Erfindung betrifft weiterhin ein Möbel, insbesondere Schlaf- oder Ruhemöbel, mit einem derartigen elektromotorischen Möbelantrieb mit Ladevorrichtung (10).

## Beschreibung

Die Erfindung betrifft einen elektromotorischen Möbelantrieb mit mindestens einem Verstellantrieb zur elektromotorischen Verstellung mindestens eines bewegbaren Möbelteils relativ zu weiteren Möbelteilen, einer Steuereinrichtung zur Ansteuerung des mindestens einen Verstellantriebs und einer mit der Steuereinrichtung über ein Kabel verbundenen Handbedienung, die Bedienelemente zur Steuerung des mindestens einen Verstellantriebs aufweist, sowie einer Ladevorrichtung mit mindestens einem Ladeanschluss zur Stromversorgung eines externen elektronischen Geräts, wobei der Ladeanschluss in die Handbedienung eingebaut ist. Die Erfindung betrifft weiterhin ein Möbel, insbesondere ein Schlaf- oder Ruhemöbel, mit einem derartigen elektromotorischen Möbelantrieb.

Elektromotorische Möbelantriebe in Schlaf- oder Ruhemöbeln, beispielsweise Betten, Schlafsofas oder Ruhesesseln, ermöglichen auf einfache Weise, eine geeignete Schlaf- oder Ruheposition einzustellen. Bei Betten kann beispielsweise ein Rücken- oder Beinteil gegenüber einem Mittelteil des Betts angehoben oder abgesenkt werden.

Mobile Kommunikations- oder Mediengeräte sind in der Regel mit einer wiederaufladbaren Batterie versehen, die über einen Ladeanschluss, häufig einen USB (Universal Serial Bus) - Anschluss, versorgt und wiederaufgeladen werden können.

Um solche elektronischen Geräte auch im Bereich eines Möbels, beispielsweise eines Schlaf- oder Ruhemöbels, einsetzen und aufladen zu können, ohne dass ein zusätzliches Ladegerät, z. B. in Form eines Steckernetzteils, verwendet werden muss, sind elektromotorische Möbelantriebe mit einer Ladevorrichtung und einem Ladeanschluss bekannt. Es wird ausgenutzt, dass diese elektromotorischen Möbelantriebe zu ihrer eigenen Stromversorgung entweder mit einem integrierten Netzteil ausgestattet sind oder zumindest mit einem externen Netzteil in Verbindung stehen. Durch die integrierte Ladevorrichtung kann dieses vorhandene Netzteil auch zum Betreiben bzw. Aufladen der externen elektronischen Geräte verwendet werden, wodurch eine zusätzliche Verkabelung im Bereich des Möbels, insbesondere eine Lichtnetzverkabelung mit zusätzlichen Steckdosen, entfallen kann.

Da die Ladevorrichtungen an dem Ladeanschluss eine in der Regel deutlich niedrigeren Spannung bereitstellen, als innerhalb des elektromotorischen Möbelantriebs zur Verfügung steht, sind in den elektromotorischen Möbelantrieben, in der Regel in einer Steuereinrichtung derselben, Spannungswandler integriert, die die vom Möbelantrieb genutzte Gleichspannung, die üblicherweise im Bereich von 24 - 30 Volt (V) liegt, in eine Spannung von in der Regel 5 V für die Ladevorrichtungen umwandelt. Die genannten 5 V gelten z.B. für die inzwischen universell eingesetzten USB-Ladeanschlüsse.

Da die Steuereinrichtungen elektromotorischer Möbelantriebe unter Umständen im Bereich des Möbels an nicht gut zugänglichen Positionen montiert sind, ist es bekannt, die Ladeanschlüsse z.B. mit Hilfe einer Einbaudose, die auf dem Möbel positioniert wird oder an geeigneter Stelle in das Möbel eingebaut wird, an anderer Stelle im Möbel zu positionieren und über ein entsprechendes Niederspannungskabel mit dem Spannungswandler in der Steuereinheit des elektromotorischen Möbelantriebs zu verbinden.

Anders als ein nachträglich vom Benutzer im Bereich des Möbels positioniertes Steckernetzteil kann das Kabel zwischen elektromotorischem Möbelantrieb und dem Ladeanschluss in diesem Fall im Bereich des Möbels weniger störend verlegt werden. Je nach Anordnung des Ladeanschlusses am Möbel und Position der Steuereinrichtung innerhalb des Möbels sind dafür jedoch Leitungslängen von bis zu mehreren Metern notwendig. Aufgrund des nicht unbeträchtlichen Stroms, der für die Ladeanschlüsse zur Verfügung stehen muss und der pro Ladeanschluss im Bereich von einigen Ampere liegen kann, sind dafür relativ große Leitungsquerschnitte erforderlich, die die Kabel teuer und sperrig machen.

Neben der Anordnung eines Ladeanschlusses an einer fest am oder im Möbel eingebauten Dose kann auch vorgesehen sein, den Ladeanschluss in eine Handbedienung einzubauen, die zur Bedienung des elektromotorischen Möbelantriebs vorhanden ist. Eine solche Handbedienung, auch Handschalter genannt, ist oft kabelgebunden und weist beispielsweise ein Spiralkabel auf. Bei dieser Anordnung stellt sich der große Leitungsquerschnitt, der für den Ladeanschluss notwendig ist, als besonders hinderlich heraus. Es können spezielle Kabel eingesetzt werden, bei denen zumindest zwei Leiter zur Versorgung des Ladeanschlusses einen höheren Leitungsquerschnitt aufweisen als die übrigen, die nur dem Übertragen von Steuersignalen dienen. Zumindest ein, in der Regel dann nicht so hochstrombelastbarer Ladeanschluss, kann auf diese Weise in den Handschalter integriert werden. Die Spezialkabel sind jedoch deutlich teuer und schlechter zu erhalten als Spiralkabel mit Adern gleichen Querschnitts.

Es ist die Aufgabe der vorliegenden Erfindung, einen elektromotorischen Möbelantrieb der eingangs genannten Art zu schaffen, bei dem mindestens ein Ladeanschluss versorgt durch den elektromotorischen Möbelantrieb in der Handbedienung angeordnet ist, wobei Kabel mit kleineren Leitungsquerschnitten und daher günstigeren Biege- und Verlegeeigenschaften zwischen der Steuereinrichtung und der Handbedienung eingesetzt werden können. Bevorzugt soll die Anordnung in der Lage sein, auch mehrere Ladeanschlüsse zu versorgen. Es ist eine weitere Aufgabe, ein Möbel mit einem elektromotorischen Möbelantrieb und mindestens einem Ladeanschluss zu beschreiben.

Diese Aufgabe wird gelöst durch einen elektromotorischen Möbelantrieb mit einer Ladevorrichtung sowie ein Möbel mit einem solchen elektromotorischen Möbelantrieb mit den Merkmalen des jeweiligen unabhängigen Anspruchs. Vorteilhafte Ausgestaltungen und Weiterbildungen sind Gegenstand der abhängigen Ansprüche.

Bei einem erfindungsgemäßen Möbelantrieb weist die Ladevorrichtung einen Spannungswandler auf, mit dem der mindestens eine Ladeanschluss verbunden ist und der in der Handbedienung angeordnet ist.

Erfindungsgemäß ist somit ein Spannungswandler in der unmittelbaren Nähe des mindestens einen Ladeanschlusses in der Handbedienung vorgesehen. Als unmittelbare Nähe ist hier ein räumlicher Abstand im Bereich von einigen Zentimetern (cm), vorzugsweise von weniger als 5 cm, zu verstehen. Eine am Ladeanschluss bereitgestellte Spannung wird also erst in der Nähe des Ladeanschlusses auf den richtigen Spannungswert gebracht, nicht bereits in der Steuereinrichtung oder durch ein separates Netzteil. Bevorzugt wird dabei das Kabel durch die Steuereinrichtung oder durch ein Netzteil zur Versorgung der Steuereinrichtung beziehungsweise zur Versorgung des Möbels mit einer Betriebsspannung beaufschlagt, die größer ist als eine am mindestens einen Ladeanschluss bereitgestellte Spannung, besonders bevorzugt ist die Betriebsspannung um einen Faktor von mindestens 4, insbesondere mindestens 5 größer als die an dem Ladeanschluss bereitgestellte Spannung.

Entsprechend ist der Strom im Kabel um den genannten Faktor kleiner. Um die gleiche Leistung mit den gleichen Verlusten übertragen zu können, kann der Querschnitt der Adern im Kabel um den gleichen Faktor geringer gewählt werden. Das Kabel wird dadurch kostengünstiger und ist leichter biegbar. Beispielsweise kann die Betriebsspannung im Bereich von 24 bis 30 V liegen, also eine typische Betriebsspannung für elektromotorische Möbelantriebe sein. Die am mindestens einen Ladeanschluss bereitgestellte Spannung kann dagegen nur bei 5 V liegen, z.B. bei Ausgestaltung des mindestens einen Ladeanschlusses als eine USB-Buchse.

Der verwendete Spannungswandler ist bevorzugt ein Schaltwandler, der geringe Verluste aufweist. Der Spannungswandler kann ein Hybridmodul umfassen, in das Halbleiterkomponenten und passive Bauelemente integriert sind. So wird eine besonders kleine Baugröße erzielt. Die integrierten passiven Bauelemente können insbesondere auch solche sein, die Leistung bzw. Energie im Rahmen der Spannungswandlung übertragen, beispielsweise eine Induktivität, z.B. eine Spule, (durch Ummagnetisierungsprozesse) und/oder ein Kondensator (durch Umladeprozesse).

Falls der Spannungswandler sowohl einen leistungsübertragenden Kondensator, als auch eine leistungsübertragende Induktivität aufweist, können beide Elemente in dem Hybridmodul ausgebildet sein, insbesondere wenn der Spannungswandler zur Übertragung nur kleinerer Leistungen geeignet ist. Alternativ ist es möglich, auch bei der Ausgestaltung des Spannungswandlers als Hybridmodul insbesondere die Induktivität als eigenständiges Bauteil vorzusehen. Um die Vorteile der kompakten Bauweise nutzen zu können, ist die Induktivität dicht und bevorzugt unmittelbar an dem Hybridmodul angeordnet. Beim Betrieb des Spannungswandlers kann Wärme in der Induktivität entstehen, die bei einer externen Anordnung der Induktivität ggf. leichter abgeführt werden kann, als bei einer Integration der Induktivität in das Hybridmodul. Eine erste Anordnung sieht vor, die Induktivität neben dem Hybridmodul anzuordnen. Eine weitere und alternative Anordnung sieht vor, das Hybridmodul und die Induktivität übereinander anzuordnen, was die flächenbezogene Kompaktheit vorteilhaft verbessert.

Weiter bevorzugt sind der mindestens eine Ladeanschluss und der Spannungswandler auf einer gemeinsamen Platine angeordnet. Auf diese Weise ist eine geringe Leitungslänge zwischen Spannungswandler und Ladeanschluss gegeben und es wird eine kompakte Baugruppe gebildet.

Der räumliche Abstand zwischen Ausgangsanschlüssen des Spannungswandlers und den Versorgungsanschlüssen des Ladeanschlusses ist somit sehr gering, so dass ein Spannungsabfall entlang der besagten Leitungslänge und somit entlang dieser Versorgungsleitungen möglichst gering ist. Der Querschnitt der Leiterbahnen dieser Versorgungsleitungen kann somit derart optimiert sein, dass die kompakte Bauweise noch weiter verbessert. In einer ersten Ausgestaltung beträgt die Leitungslänge weniger als 7 Zentimeter (cm). Können Spannungswandler und Ladeanschluss sehr kompakt angeordnet werden, beträgt die Länge weniger als 2 cm. Sind Spannungswandler und Ladeanschluss auf gegenüberliegenden Seiten einer Leiterplatte angeordnet, kann sich die Länge weiter reduzieren und kann sogar kleiner als 1 cm betragen.

Eingebaut in einer derartigen kabelgebundenen Handbedienung wird der Ladeanschluss besonders einfach zugänglich und es kann jegliche zusätzliche Verkabelung im oder am Möbel entfallen, da an einem Stecker bzw. an Adern des Kabels der kabelgebundenen Handbedienung das Betriebsspannungspotential des elektromotorischen Möbelantriebs bereits vorliegt. Ohne Komponenten des elektromotorischen Möbelantriebs wie beispielsweise die Steuereinrichtung ändern zu müssen, kann somit auf einfachste Art und Weise eine kabelgebundene Handbedienung nunmehr mit integrierter Ladevorrichtung und Spannungswandler zum Einsatz kommen. Häufig werden Spiralkabel zum Anschluss der Handbedienung an die Steuereinrichtung eingesetzt. Durch die erfindungsgemäße Ausbildung der Ladevorrichtung mit dem Spannungswandler benachbart zu dem Ladeanschluss kann vorteilhaft ein (Spiral-) Kabel verwendet werden, das Versorgungsadern aufweist, die mit dem Spannungswandler verbunden sind, und Steuerungsadern, die mit den Bedienelementen verbunden sind, wobei die Versorgungsadern und die Steuerungsadern einen gleichen Leitungsquerschnitt haben. Die Verwendung von Spezialkabeln, die für die Versorgungsadern einen größeren Leitungsquerschnitt bieten als für die Steuerungsadern, ist nicht notwendig. Ferner sind somit die leichte Handhabung und der Nutzerkomfort eines Spiralkabels, das leicht, hoch flexibel, einfach herstellbar und gut zu montieren ist. Diese Eigenschaften des Spiralkabels sind sowohl für die Fertigung der Handbedienung, als auch für dessen Benutzer vorteilhaft.

Eine besonders vorteilhafte, da kompakte und leicht montierbare Ausführung einer Handbedienung sieht vor, den Ladeanschluss und die manuell betätigbaren Bedienelemente zur Steuerung des wenigstens einen Verstellantriebs in einem gemeinsamen Gehäuse anzuordnen. Bei einer mobilen Handbedienung beziehungsweise bei einem Handberät ist das Gehäuse geschlossen ausgebildet. Eine fest mit dem Möbel verbindbare Handbedienung kann alternativ ein offenes Gehäuse aufweisen. Als vorteilhafte Weiterbildung sind der wenigstens eine Ladeanschluss, sowie der Spannungswandler und die dem Verstellantrieb zugeordneten Tastschalter auf einer gemeinsamen Platine angeordnet. Alternativ dazu kann auch hier eine separate Platine zur Aufnahme des Ladeanschlusses und des Spannungswandlers vorgesehen sein, wodurch eine Art Baukastensystem der Handbedienung geschaffen sein kann und die Handbedienung wahlweise mit oder ohne Ladeanschluss ausgebildet sein kann.

Eine besondere Ausführung des Spannungswandlers und der Ladevorrichtung umfasst eine selbsttätige Einstellprozedur des Ladestromes. Dabei orientiert sich der Spannungswandler an den Anforderungen des an dem Ladeanschluss angeschossenen Geräts und stellt die Höhe des Stromflusses nach dessen Vorgaben ein. Dabei erfolgt ein Informationsfluss an den Spannungswandler beziehungsweise an die Ladevorrichtung, wobei die Höhe des Stromflusses dem Informationsgehalt des Informationsflusses entspricht. Ein beispielhafter Informationsfluss beziehungsweise Informationsgehalt ist durch wenigstens einen Datensatz gebildet.

Ferner sind Spannungswandler und/oder Ladevorrichtung mit Sensorik für Wärme und eine Höhe des Stromflusses ausgestattet. Dabei wird die Wärmeentwicklung der Ladevorrichtung und/oder des Spannungswandlers, sowie die Höhe des Stromflusses durch den Spannungswandler detektiert. Bei Erreichen eines Schwellwertes für Wärme oder Stromfluss wird regelnd oder alternativ steuernd in den Ladevorgang eingegriffen, was eine Begrenzung der Wärmeentwicklung und/oder des Stromflusses bewirkt oder gegebenenfalls den Stromfluss abschaltet.

Ein erfindungsgemäßes Möbel, insbesondere Schlaf- oder Ruhemöbel, zeichnet sich durch einen derartigen elektromotorischen Möbelantrieb mit Ladevorrichtung aus. Es ergeben sich die im Zusammenhang mit dem elektromotorischen Möbelantrieb beschriebenen Vorteile.

Die Erfindung wird nachfolgend anhand von Ausführungsbeispielen mit Hilfe von Figuren näher erläutert. Es zeigen:
- Fig. 1: ein Beispiel eines Möbels mit einem elektromotorischen Möbelantrieb und einer Ladevorrichtung;
- Fig. 2a, b: die Ladevorrichtung aus Fig. 1 in verschiedenen Darstellungen; und
- Fig. 3: eine erfindungsgemäße Ladevorrichtung zur Verwendung mit einem elektromotorischen Möbelantrieb.

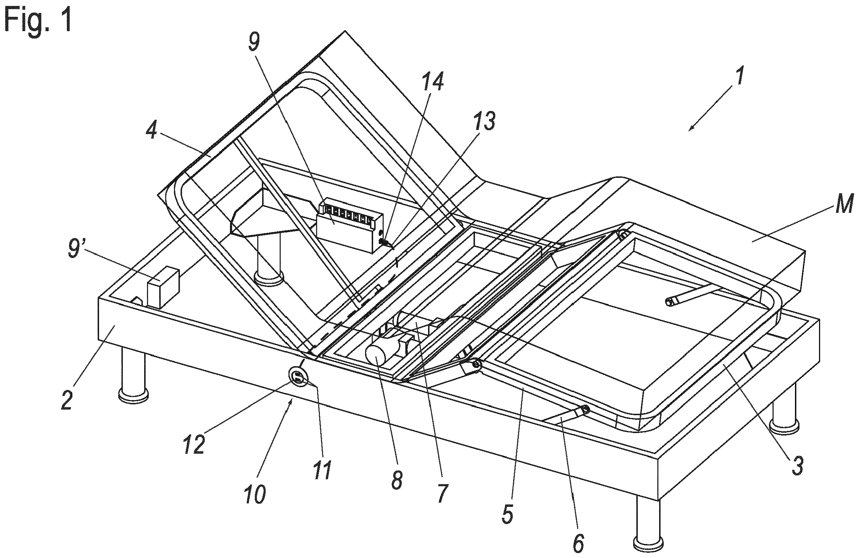

Fig. 1 zeigt ein Bett 1 als Beispiel eines Möbels mit einem elektromotorischen Möbelantrieb. Das Bett 1 weist wenigstens ein Stützelement 3 zur Aufnahme von z.B. einer Polsterung oder einer Matratze M auf. Das Bett 1 kann als ein Einzelbett für eine Person oder auch als Doppelbett für mehrere Personen ausgelegt sein. Das Stützelement 3 ist z.B. als ein Lattenrost, als ebene Stützfläche oder dergleichen ausgebildet und an einem Grundelement 2 montiert oder in dieses eingelegt, hier einem Gestell mit Füßen, mit dem das Bett 1 an einem Aufstellort, z.B. Fußboden, aufgestellt ist.

Das Stützelement 3 weist im dargestellten Beispiel ein Rückenteil 4 und ein Beinteil 5 auf, welche relativ zu einem hier festen mittleren Teil oder relativ zu dem Grundelement 2 beweglich gelagert angeordnet sind. Diese bewegliche Anordnung ist hier mittels eines so genannten Bewegungsbeschlags 6 realisiert. Die Bewegung ist verschiebbar und/oder schwenkbar ausgebildet.

Das beweglich gelagerte Rückenteil 4 und das Beinteil 5 sind jeweils mit einem elektromotorischen Verstellantrieb 7, 8 gekoppelt. So ist das Rückenteil 4 mit dem elektromotorischen Verstellantrieb 7 gekoppelt. Zur Bewegung bzw. Verstellung des Beinteils 5 ist der elektromotorische Verstellantrieb 8 vorgesehen.

Die elektromotorischen Verstellantriebe 7, 8 sind vorliegend als Linearantriebe ausgebildet. Die Linearantriebe weisen einen oder eine Anzahl Elektromotoren auf, wobei jedem Elektromotor ein Drehzahlreduziergetriebe mit wenigstens einer Getriebestufe nachgeschaltet ist. Dem Drehzahlreduziergetriebe kann ein weiteres Getriebe, beispielsweise in Form eines Gewindespindelgetriebes, nachgeschaltet sein, welches aus der Drehbewegung des Elektromotors eine Linearbewegung eines Abtriebsgliedes erzeugt. Das letzte Getriebeglied oder ein damit verbundenes weiteres Glied bildet das Abtriebsglied. Das Abtriebsglied des jeweiligen elektromotorischen Verstellantriebs steht mit dem jeweiligen Möbelbauteil (Rückenteil 4, Beinteil 5) oder alternativ mit einem mit dem Grundelement 2 verbundenes Bauteil in Verbindung, so dass bei einem Betrieb des Elektromotors des jeweiligen Verstellantriebs 7, 8 die beweglichen Möbelbauteile 4, 5 relativ zueinander bzw. relativ zum Grundelement 2 verstellt werden.

Die elektromotorischen Verstellantriebe 7, 8 sind mit einer Steuereinrichtung 9 verbunden. Diese Verbindung kann z.B. als steckbare Kabelverbindung ausgeführt sein, was hier nicht näher dargestellt ist.

Die Steuereinrichtung 9 ist im dargestellten Beispiel mit einem externen Netzteil 9' verbunden, das über ein in diesem Beispiel nicht gezeigtes Netzkabel mit einem Netzstecker mit einem Netzanschluss verbindbar ist. Das externe Netzteil 9' stellt eine Gleichspannung im Bereich von 24-30 V zur Stromversorgung des elektromotorischen Möbelantriebs, insbesondere der elektromotorischen Verstellantriebe 7, 8, bereit. In einer alternativen Ausgestaltung kann ein Netzteil in der Steuereinrichtung 9 integriert sein, so dass auf das externe Netzteil 9' verzichtet werden kann und die Steuereinrichtung 9 unmittelbar mit einem Netzkabel an das Lichtnetz angeschlossen wird.

Angeschlossen an die Steuereinrichtung 9 ist eine nicht erfindungsgemäße Ladevorrichtung 10 mit hier zwei Ladeanschlüssen 11. Im gezeigten Beispiel sind die Ladeanschlüssen 11 gemäß der USB-Spezifikation ausgebildet und werden daher nachfolgend auch als USB-Buchsen 11 bezeichnet. Die USB-Buchsen 11 sind in einer Einbaudose 12 gut zugänglich im Bereich des Grundelements 2 am Bett 1 angebracht. Die genaue Positionierung ist hier beispielhaft und soll lediglich zeigen, dass eine Anordnung im Möbel an einer leicht zugänglichen Stelle möglich ist, auch wenn die Steuereinrichtung 9 nicht so gut zugänglich entfernter im Möbel positioniert ist. Die Einbaudose 12 ist über ein Kabel 13 mit Stecker 14 mit einer Anschlussbuchse der Steuereinrichtung 9 verbunden. Das Kabel 14 ist in der Fig. 1 gestrichelt wiedergegeben.

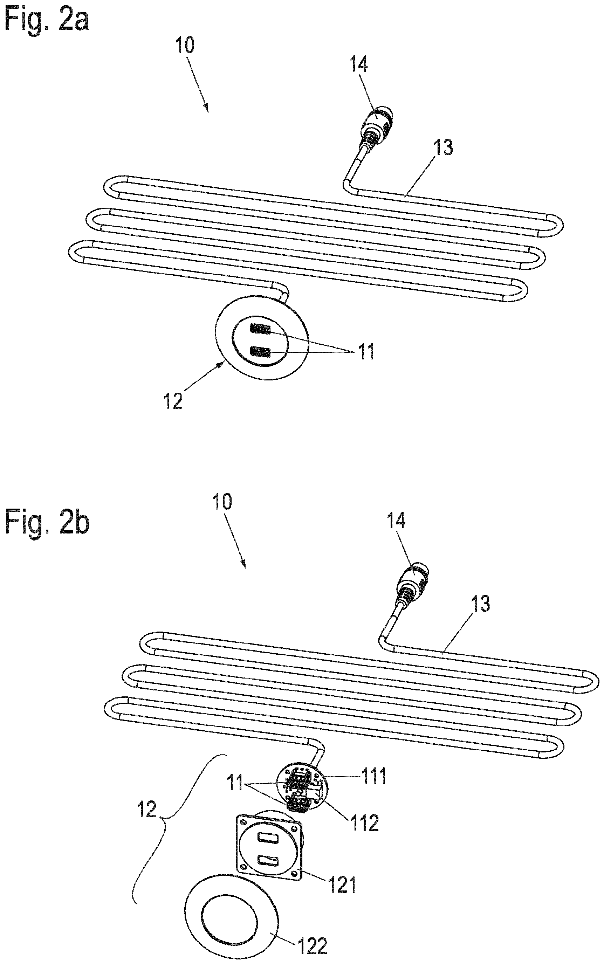

In den Fig. 2a und 2b ist die Ladevorrichtung 10 aus Fig. 1 separat dargestellt. Bei Fig. 2b ist die Einbaudose 12, die in Fig. 2a im zusammengesetzten Zustand gezeigt ist, nach Art einer Explosionsdarstellung geöffnet dargestellt um Einblick in den inneren Aufbau zu gewähren.

Die Einbaudose 12 weist ein Gehäuse 121 auf, das in diesem Beispiel in einen Ausschnitt des Möbels eingelassen wird und im Bereich eines aufliegenden Flansches befestigt, z.B. eingeschraubt wird. Eine Schnappbefestigung ist ebenfalls denkbar. Der Flansch wird dann durch eine Abdeckblende 122 abgedeckt. Das Gehäuse 121 weist nach vorne hin Öffnungen auf, durch die USB-Buchsen 11 zugänglich sind. Im Gehäuse 121 ist eine Platine 111 positioniert, die mit dem Kabel 13 verbunden ist.

In diesen Figuren nicht dargestellt, kann zudem ein hinterer Verschlussdeckel für das Gehäuse 121 vorgesehen sein, der bevorzugt auch eine Zugentlastung für das Kabel 13 bietet.

Wie aus Fig. 2b ersichtlich ist, sind die USB-Buchsen 11 auf der Platine 111 eingelötet, auf der auch unmittelbar ein Spannungswandler 112 positioniert ist. Der Spannungswandler ist mit dem Kabel 13 und dann mit dem Stecker 14 verbunden. Er dient der Umwandlung der über das Kabel 13 zugeführten Betriebsspannung des Möbelantriebs in eine für die USB-Buchse 11 geeignete Spannung, gemäß der USB-Spezifikation eine Gleichspannung von 5 V. Zugeführt wird über das Kabel 13 eine Gleichspannung im Bereich von 24 V bis 30 V.

Der Spannungswandler 112 ist als Schaltwandler (Tiefsetzsteller) ausgebildet, wodurch eine hohe Umwandlungseffektivität im Bereich von 90% oder mehr erreicht wird. Bevorzugt wird ein Hybridmodul verwendet, der neben integrierten Halbleiterbauteilen auch benötigte passive Elemente wie Induktivitäten und/oder Kondensatoren umfasst. So kann eine besonders kleine Baugröße erzielt werden, die eine Integration in die Einbaudause 12 überhaupt erst sinnvoll ermöglicht.

Aufgrund der hohen Umwandlungseffektivität verhält sich der Strom im Kabel 13 gegenüber dem von den USB-Buchsen 11 gelieferten Strom in etwa umgekehrt zum Verhältnis der Eingangsspannung zur Ausgangsspannung des Spannungswandlers 112. Bei den genannten Spannungen (24-30 V gegenüber 5 V) liegt das Spannungsverhältnis etwa im Bereich 5:1 bis 6:1. Entsprechend ist der Strom im Kabel 13 um einen Faktor 5 bis 6 kleiner als der von den USB-Buchsen 11 gelieferte Strom. Bei einem festgelegten Maximalstrom, den die USB-Buchsen 11 liefern können, kann entsprechend der Querschnitt der Adern im Kabel 13 um den gleichen Faktor 5 bis 6 geringer gewählt werden, ohne dass Verluste im Kabel 13 steigen.

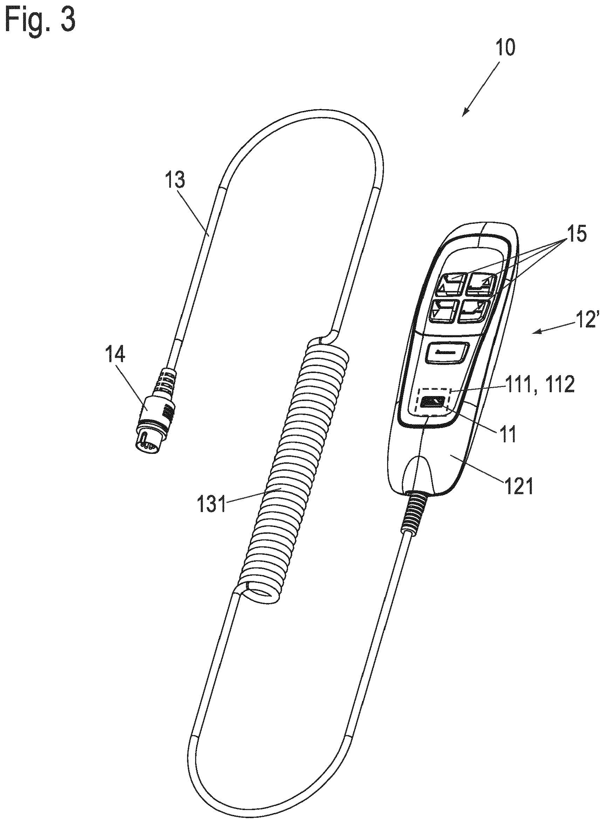

Fig. 3 zeigt ein erfindungsgemäßes Ausführungsbeispiel einer Ladevorrichtung 10, die zum Beispiel im Zusammenhang mit dem in Fig. 1 gezeigten Bett verwendet werden kann. In diesem Fall weist die Ladevorrichtung 10 eine Handbedienung 12' auf bzw. ist mit dieser integriert ausgebildet, wobei die Handbedienung 12' der Bedienung des elektromotorischen Möbelantriebs dient.

Entsprechend ist das Gehäuse 121 der Ladevorrichtung 10 als ein Handgerät geformt und trägt Bedienelemente 15, beispielsweise Tastschalter, u.a. zur Bedienung der Verstellantriebe 7, 8 des elektrischen Möbelantriebs.

Wiederum ist eine USB-Buchse 11 leicht zugänglich am Gehäuse 121 angeordnet, vorliegend beispielhaft genau eine USB-Buchse 11.

In der Fig. 3 ist die Platine 111, die den Spannungswandler 112 trägt, gestrichelt dargestellt. Sie ist in unmittelbarer Nähe der USB-Buchse 11 innerhalb des Gehäuses 121 angeordnet, bzw. sind die USB-Buchsen 11 auf der Platine 111 eingelötet. Das Kabel 13 ist als Spiralkabel mit einem Spiralabschnitt 131 ausgebildet. Bei diesem ist die Reduzierung des Stroms, der über das Kabel 13 zur Versorgung der USB-Ladebuchse 11 übertragen werden muss, besonders vorteilhaft.

Im Kabel 13 können neben den Adern, die die Eingangsspannung für den Spannungswandler 112 zuführen (nachfolgend Versorgungsadern genannt), weitere Adern (nachfolgend Steueradern genannt) vorhanden sein, die mit den Bedienelementen 15 verbunden sind und Steuersignale an die Steuereinrichtung 9 weiterleiten. Dadurch, dass die Ströme in den Versorgungsadern für den Spannungswandler 112 um den zuvor genannten Faktor 5 bis 6 kleiner sind als bei einer direkten Versorgung der USB-Buchse 11, können die Versorgungsadern den gleichen (kleinen) Querschnitt haben wie die Steueradern. Das lässt die Verwendung eines handelsüblichen Spiralkabels als Kabel 13 zu.

In einer alternativen Ausgestaltung der Ladevorrichtung 10 kann vorgesehen sein, die Steuerinformationen für die Steuereinrichtung 9 seriell kodiert digital zu übertragen. In dem Fall wird neben den Versorgungsadern nur eine Steuerader (bei gemeinsam verwendeter Masseleitung) oder zwei Steueradern benötigt.

In einer Weiterbildung können die seriell kodierten Steuerinformationen nach Art einer sogenannten PLC (Power Line Communication) - Übertragung auf die Versorgungsadern aufmoduliert werden. In dem Fall brauchen nur die beiden Versorgungsadern im Kabel 13 vorhanden sein.

### Bezugszeichen

- 1: Bett
- 2: Grundelement
- 3: Stützelement
- 4: Rückenteil
- 5: Beinteil
- 6: Bewegungsbeschlag
- 7, 8: Verstellantrieb
- 9: Steuereinrichtung

- 10: Ladevorrichtung
- 11: Ladeanschluss (USB-Buchse)
- 111: Platine
- 112: Spannungswandler
- 12: Einbaudose
- 12': Handbedienung
- 121: Gehäuse
- 122: Abdeckblende
- 13: Kabel
- 131: Spiralabschnitt
- 14: Stecker
- 15: Bedienelement

- M: Matratze

## Patentansprüche

1. Elektromotorischer Möbelantrieb mit mindestens einem Verstellantrieb (7, 8) zur elektromotorischen Verstellung mindestens eines bewegbaren Möbelteils relativ zu weiteren Möbelteilen, einer Steuereinrichtung (9) zur Ansteuerung des mindestens einen Verstellantriebs (7, 8) und einer mit der Steuereinrichtung (9) über ein Kabel (13) verbundenen Handbedienung (12'), die Bedienelemente (15) zur Steuerung des mindestens einen Verstellantriebs (7, 8) aufweist, sowie einer Ladevorrichtung (10) mit mindestens einem Ladeanschluss (11) zur Stromversorgung eines externen elektronischen Geräts, wobei der Ladeanschluss (11) in die Handbedienung (12') eingebaut ist, **dadurch gekennzeichnet, dass** die Ladevorrichtung (10) einen Spannungswandler (112) aufweist, mit dem der mindestens eine Ladeanschluss (11) verbunden ist und der in der Handbedienung (12') angeordnet ist.

2. Elektromotorischer Möbelantrieb nach Anspruch 1, bei dem das Kabel (13) durch die Steuereinrichtung (9) mit einer Betriebsspannung beaufschlagt wird, die größer ist als eine am mindestens einen Ladeanschluss (11) bereitgestellte Spannung.

3. Elektromotorischer Möbelantrieb nach Anspruch 2, bei dem die Betriebsspannung, mit der das Kabel (13) durch die Steuereinrichtung (9) mit einer beaufschlagt wird, um einen Faktor von mindestens 4, bevorzugt mindestens 5 größer ist als die am mindestens einen Ladeanschluss (11) bereitgestellte Spannung.

4. Elektromotorischer Möbelantrieb nach Anspruch 3, bei dem die Betriebsspannung, mit der das Kabel (13) durch die Steuereinrichtung (9) mit einer beaufschlagt wird, zwischen 24 und 30 V liegt und die am mindestens einen Ladeanschluss (11) bereitgestellte Spannung 5 V beträgt.

5. Elektromotorischer Möbelantrieb nach einem der Ansprüche 1 bis 4, bei dem der mindestens eine Ladeanschluss (11) eine USB-Buchse ist.

6. Elektromotorischer Möbelantrieb nach einem der Ansprüche 1 bis 5, bei dem der Spannungswandler (112) ein Schaltwandler ist.

7. Elektromotorischer Möbelantrieb nach Anspruch 6, bei dem der Spannungswandler (112) ein Hybridmodul umfasst, in dem Halbleiterkomponenten und passive Bauelemente, insbesondere auch leistungsübertragende passive Bauelemente, integriert sind.

8. Elektromotorischer Möbelantrieb nach Anspruch 7, bei dem ein leistungsübertragender Kondensator in das Hybridmodul integriert ist, wohingegen eine leistungsübertragende Spule extern von dem Hybridmodul angeordnet ist.

9. Elektromotorischer Möbelantrieb nach einem der Ansprüche 1 bis 8, bei dem der mindestens eine Ladeanschluss (11) und der Spannungswandler (112) auf einer gemeinsamen Platine (111) angeordnet sind.

10. Elektromotorischer Möbelantrieb nach Anspruch 9, bei dem die Platine (111) in einem Gehäuse (121) der Handbedienung (12') eingebaut ist.

11. Elektromotorischer Möbelantrieb nach einem der Ansprüche 1 bis 10, bei dem das Kabel (13) ein Spiralkabel ist.

12. Elektromotorischer Möbelantrieb nach einem der Ansprüche 1 bis 11, bei dem das Kabel (13) Versorgungsadern aufweist, die mit dem Spannungswandler (121) verbunden sind, und Steuerungsadern, die mit den Bedienelementen (15) verbunden sind, wobei die Versorgungsadern und die Steuerungsadern einen gleichen Leitungsquerschnitt aufweisen.

13. Möbel, insbesondere Schlaf- oder Ruhemöbel, **gekennzeichnet durch** einen elektromotorischen Möbelantrieb mit Ladevorrichtung (10) gemäß einem der Ansprüche 1 bis 12.
